# EUROPÄISCHE PATENTANMELDUNG

(11) **EP 0 697 237 A1**
(43) Veröffentlichungstag der Anmeldung: **21.02.1996**
(21) Anmeldenummer: 95112261.3
(22) Anmeldetag: 04.08.1995
(51) Int. Cl.: B01D 53/66, B01D 53/86

(54) **Filtermaterial und Verfahren zur Entfernung von Ozon aus Gasen und Flüssigkeiten**

(30) Priorität: 17.08.1994 DE 4429164
(71) Anmelder: HOECHST AKTIENGESELLSCHAFT, D-65929 Frankfurt am Main (DE)
(72) Erfinder: von Eysmondt, Jörg, Dr., D-65719 Hofheim (DE); Schleicher, Andreas, Dr., D-65615 Beselich (DE); Frank, Georg, Dr., D-72074 Tübingen (DE)

(57) **Zusammenfassung**

Die Erfindung bezieht sich auf ein Filtermaterial sowie ein Verfahren zur Entfernung von Ozon aus Gasen und Flüssigkeiten, bei welchem ein Gasstrom oder eine Flüssigkeit mit einem Filtermaterial, welches mindestens ein vernetztes Copolymer und/oder Polystyrol enthält, in Kontakt gebracht wird. Das Filtermaterial kann bei allen ozonhaltigen Gasströmen und Flüssigkeiten verwendet werden. Die Copolymere liegen in der Regel als Granulate vor und werden mit dem Ozon enthaltenden Gas oder der ozonhaltigen Flüssigkeit kontaktiert. So findet das Filtermaterial beispielsweise Anwendung bei der Beseitigung des bei der Sterilisation verwendeten oder aus einem Kopiergerät entstandenen Ozons, ferner zur Entfernung und Unschädlich-machung von Ozon in Flüssigkeiten.

## Beschreibung

Die Erfindung bezieht sich auf ein Filtermaterial sowie ein Verfahren zur Entfernung von Ozon aus Gasen und Flüssigkeiten, bei welchem ein Gasstrom oder eine Flüssigkeit mit einem Filtermaterial aus vernetzten Copolymeren oder Polystyrol in Kontakt gebracht wird.

Es ist bekannt, daß bei elektrophotographischen Kopier- und Druckverfahren kleine Mengen von Ozon gebildet werden. Das entstehende Ozon wird von den verwendeten Geräten, beispielsweise Fotokopierer oder Laserdrucker, permanent in die Umgebungsluft abgegeben. Ozon belästigt nicht nur durch seinen Geruch, sonder wirkt auch in geringen Konzentrationen gesundheitsschädlich. Um hier Abhilfe zu schaffen, sind eine Vielzahl von Verfahren entwickelt worden, die die Entfernung des Ozons aus dem von derartigen Vorrichtungen freigesetzten Luftstrom beschreiben. Dabei wird das Ozon entweder zerstört oder chemisch oder physikalisch gebunden.

Bekannt ist die Zerstörung des Ozons durch Erhitzen oder durch Wechselwirkung mit einem Metallkatalysator (vgl. JP-60 197 223 und JP-60 19 115). Nachteilig sind bei der thermischen Zerstörung des Ozons allerdings der Energiebedarf und die hohe Temperatur, die zur vollständigen Ozonzersetzung notwendig sind.

Ferner ist bekannt, den Gasstrom durch ein Filter zu leiten, in dem das Ozon katalytisch zersetzt wird (vgl. JP-58 081 425). Das Basismaterial des Filters ist mit einer oder mehreren Metallverbindungen, Metallen oder Legierungen, beispielsweise Eisen-, Mangan- oder Nickelverbindungen imprägniert, denen weiterhin eine Verbindung oder ein Metall aus der Gruppe der Edelmetalle, beispielsweise Palladium oder Platin, zugegeben wird. Diese Katalysatoren sind sehr teuer und haben meist nur eine begrenzte Lebensdauer, da solche heterogenen Katalysatoren durch verschiedene Katalysatorgifte schnell desaktiviert werden.

Bekannt ist auch ein Filter bestehend aus einem Trägermaterial aus Aluminiumoxid oder Aktivkohle, das mit ethylenisch ungesättigten Verbindungen imprägniert ist, die mit dem Ozon reagieren, (vgl. DE 37 28 802). Nachteilig ist, daß die Verbindungen, beispielsweise Terpene, je nach Trägermaterial in vielen Fällen flüchtig sind, also in geringen Mengen ausgetragen werden können und somit verloren gehen. Außerdem steht nur ein geringer Teil des Filtergewichtes als aktiver Bestandteil zur Verfügung.

Weiterhin ist ein Filter zur Ozonzersetzung bekannt, das aus einer Faserplatte besteht, deren Fasern einen ozonzersetzenden Katalysator enthalten (vgl. JP-03 270 718). Diese Fasern, die in einer bevorzugten Ausführungsform porös sind, bestehen aus einem Polymer mit einer der folgenden funktionellen Gruppen, die mit Ozon stark reagieren, z. B. -SH, =S, -NH₂, =NH, -CN und -OH. Als ozonzersetzende Katalysatoren werden Metalle wie Gold, Silber, Kupfer, Palladium, Eisen, Nickel, Kobalt und Mangan oder ihre Oxide sowie Tonerde und Kieselgur genannt. Die für die Herstellung des Filters benötigte Faser wird nach einem üblichen Spinnprozeß erhalten, wobei der Katalysator in der Spinnlösung dispergiert und nach dem Spinnen gleichmäßig in der Faser verteilt ist. Durch Zugabe eines zweiten Polymers, das mit dem ersten Polymer eine Phasentrennung hervorruft, und verschiedene Nachbehandlungen des Spinnproduktes erhält man eine poröse Phase, in der die Katalysatorpartikel enthalten sind. Die erhaltenen Fasern werden dann nach üblichen Methoden zu dem Filter konfektioniert. Abgesehen davon, da die als geeignet angesehenen Polymeren nur en bloc genannt werden - offenbart ist ausschließlich Polyacrylnitril - ist die Herstellung der Filter umständlich und sehr aufwendig.

Schließlich ist bekannt, Ozon aus Fotokopierern direkt mit Aktivkohlepulver oder Kohlefasern umzusetzen, wobei die Aktivkohle zuvor mit Alkali- oder Erdalkalisalzen imprägniert wurde (vgl. JP 04 071641). Ein Nachteil von Aktivkohle ist ihre Brennbarkeit bei langandauernder Ozon-Exposition und die Freisetzung von Schadgasen wie Kohlenmonoxid und Kohlendioxid als Folge der Oberflächenoxidation durch Ozon.

Aufgabe der Erfindung war es daher, ein Filtermaterial und ein Verfahren zur Ozonentfernung zu finden, bei denen die genannten Nachteile nicht auftreten.

Die Erfindung betrifft ein Filtermaterial zur Entfernung von Ozon aus Gasen und Flüssigkeiten, dadurch gekennzeichnet, daß das Filtermaterial mindestens ein vernetztes Copolymer und/oder Polystyrol enthält.

Die Erfindung betrifft auch ein Verfahren zur Entfernung von Ozon aus Gasen, in Gegenwart des erfindungsgemäßen Filtermaterials, insbesondere in Gegenwart eines Filtermaterials, welches ein makroporöses vernetztes Copolymer mit wiederkehrenden Struktureinheiten, insbesondere der Formel I oder der Formel II als ozonzersetzende Verbindung enthält, wobei das Gas oder die Flüssigkeit mit der Oberfläche des Filtermaterials in Kontakt gebracht wird.

Das Filtermaterial gemäß der Erfindung enthält bevorzugt ein vernetztes Copolymer mit wiederkehrenden Struktureinheiten der Formel I 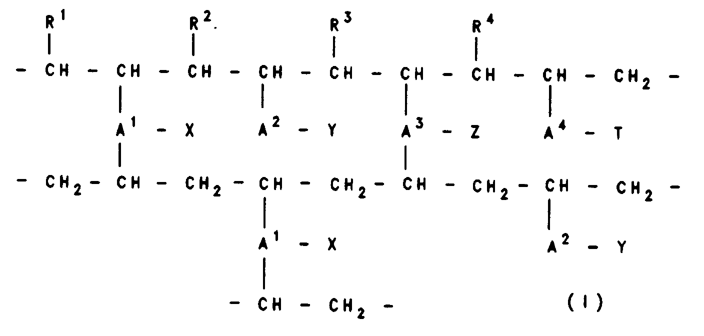
oder der Formel II 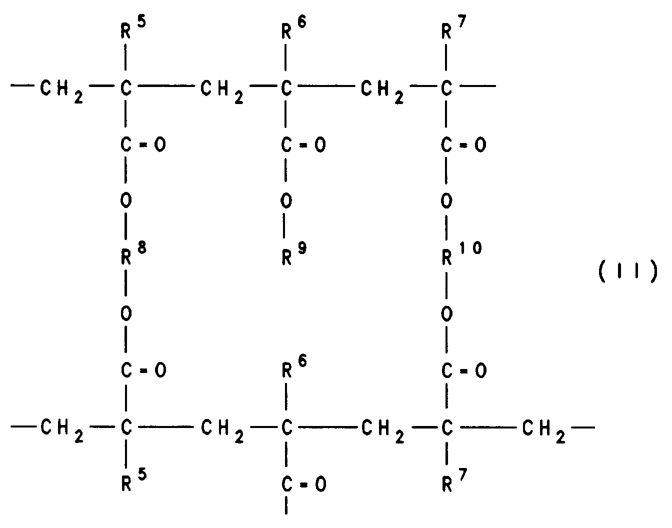
In diesen Formeln sind A¹, A², A³, A⁴, X, Y, Z und T gleich oder verschieden und bedeuten substituierte oder unsubstituierte Arylensysteme mit insgesamt 6 bis 18 C-Atomen. Bevorzugte Substituenten sind Halogenatome (F, Cl, Br) oder Alkylgruppen, vorzugsweise -CH₃, -C₂H₅. Auch Aromatensysteme mit ein oder mehreren Heteroatomen, vorzugsweise Stickstoff, sind geeignet. R¹ bis R⁷ und R⁹ sind gleich oder verschieden und bedeuten ein Wasserstoffatom oder eine Alkylgruppe mit 1 bis 20 C-Atomen, eine Hydroxygruppe oder ein Halogenatom. R⁸ und R¹⁰ bedeuten unabhängig voneinander eine C₂ - C₁₀ - Alkylengruppe, vorzugsweise -C₂H₄- oder -C₃H₆-.

Die vernetzten Copolymere sind im allgemeinen makroporös.

Besonders geeignete makroporöse Copolymere sind solche auf Basis Styrol/Divinylbenzol, beispielsweise mit Struktureinheiten der Formel III: 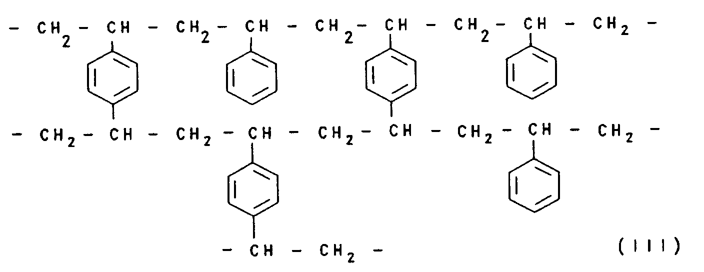
Ebenfalls besonders geeignete makroporöse Copolymere sind solche auf Basis Methacrylat/Ethylenglykol, beispielsweise mit Struktureinheiten der Formel IV: 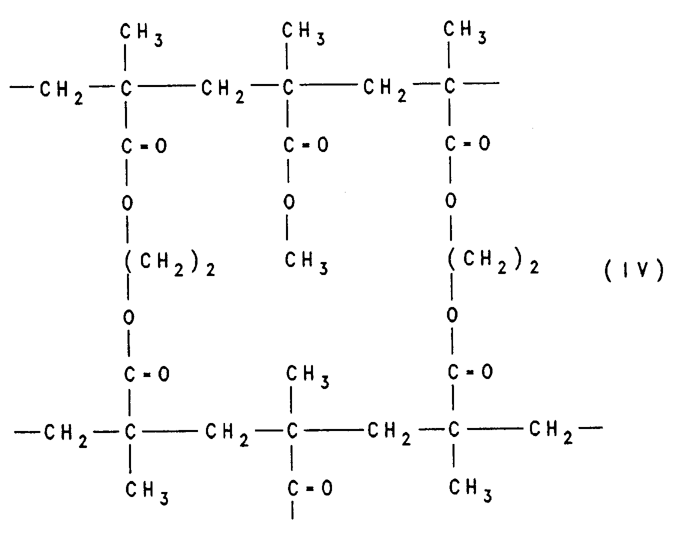
Die makroporösen vernetzten Copolymere besitzen in der Regel eine spezifische Oberfläche von 100 bis 900 m²/g, eine Dichte von 0,5 bis 0,7 g/cm³ und ein Poren-volumen von 40 bis 60 % des Gesamtvolumens.

Die makroporösen Copolymere liegen in der Regel als Pulver, Granulate oder Formkörper vor. Die Herstellung der Copolymere über Suspensionspolymerisation ist dem Fachmann bekannt. Die hohe spezifische Oberfläche der Copolymere wird durch spezielle Polymerisationsbedingungen erzielt, die dem Fachmann ebenfalls bekannt sind. Pulver besitzen handelsübliche Teilchengrößen von 0,2 bis 1,2 mm Korngröße.

Im allgemeinen liegen die Anwendungstemperaturen für die Entfernung von Ozon im Bereich von -10 bis + 80°C, vorzugsweise von 0 bis 50°C.

Polystyrol oder Blends, die Polystyrol enthalten, können zur Entfernung von Ozon aus Gasen oder Flüssigkeiten verwendet werden. Dabei sollten die polystyrolhaltigen Filtermaterialien eine möglichst größere Oberfläche aufweisen.

Die Entfernung von Ozon erfolgt im allgemeinen quantitativ, wobei die Reaktionszeit von den Strömungsgeschwindigkeiten und der Oberfläche des Filterguts, beziehungsweise der Schütthöhe bei Pulvern abhängig ist. Im allgemeinen beträgt die Verweilzeit im Filter 0,1 Sekunden bis 10 Minuten, vorzugsweise 0,5 Sekunden bis 1 Minute. Die Grenzwerte können aber auch überschritten werden.

Beim Kontakt der makroporösen vernetzten Copolymere gemäß Formel (I) und Formel (II) mit dem ozonhaltigen Medium werden die Polymere an der Oberfläche oxidiert. Durch Oberflächenuntersuchungen (ESCA) konnten nach Ozon-Absorption Sauerstoffmoleküle in der Polymer-Matrix nachgewiesen werden.

Das Filtermaterial gemäß der Erfindung kann bei allen ozonhaltigen Gasströmen und Flüssigkeiten verwendet werden. So findet es beispielsweise Anwendung bei der Beseitigung des bei der Sterilisation verwendeten oder aus einem Kopiergerät entstandenen Ozons, ferner zur Entfernung und Unschädlichmachung von Ozon in Flüssigkeiten.

### Beispiele

### Allgemeine Versuchsbedingungen

Das polymere Filtermaterial nach Formel I und II wurde zunächst im Trockenschrank bei 60°C/50 mbar für 5 Stunden getrocknet und anschließend in ein Glasröhrchen mit 2 cm Innendurchmesser und 10 cm Länge geschüttet. Um das Polymer aufnehmen zu können, war das Glasrohr am unteren Ende mit einer porösen Glasplatte (Fritte) verschlossen. Durch dieses Pulverbett wurde der ozonhaltige Gasstrom geleitet. Strömungsgeschwindigkeiten und Temperaturen wurden über handelsübliche Meßgeräte überwacht.

Das in den Beispielen als Ausgangsstoff benötigte Ozon wurde mit handelsüblichen Ozonerzeugern (Horiba O₃-Prüfgaserzeuger und Fischer Ozongenerator 503) aus Sauerstoff erzeugt. Die Ozonkonzentration wurde kontinuierlich vor und hinter dem Filter mit hochempfindlichen Meßgeräten auf UV-Photometerbasis (Horiba APOA 350 E der Firma Horiba (Industriestr.9, D-61449 Steinbach) und Fischer ® Ozotron 23) gemessen. Die Gasströme wurden nach Bedarf mit Luftfeuchtigkeit angereichert. Dabei wurden nacheinander die Strömungsgeschwindigkeiten und die Ozonkonzentration eingestellt. Die angegebene Ozon-Konzentration hinter dem Filter bezieht sich immer auf den Wert am Ende der Versuchsdauer.

### Beispiel 1

- Filtermaterial:: Polymerbasis Polystyrol/Divinylbenzol
(® Amberlite XAD 4 (Fa. Rohm und Haas Deutschland, Frankfurt)
Spez. Oberfläche: 750 m²/mg
Korngröße: 0,3 bis 1,2 mm

| Gaszusammensetzung: Luft, Ozon, 50 % rel. Luftfeuchte | | | | |
|---|---|---|---|---|
| Vol-Strom [l/h] | Einwaag e [g] | Versuchsdauer [h] | Ozon (vor Filter) [mg/m³] | Ozon (nach Filter) [mg/m³] |
| 50 | 9,0 | 8 | 10 000 | 0,05 |
| 110 | 2,6 | 2 | 0,66 | 0,00 |

### Beispiel 2

Filtermaterial: Polymerbasis Polystyrol/Divinylbenzol
(Amberlite XAD 16)
Spez. Oberfläche: 825 m²/mg
Korngröße: 0,3 bis 1,2 mm

| Gaszusammensetzung: Luft, Ozon, 50 % rel. Luftfeuchte | | | | |
|---|---|---|---|---|
| Vol-Strom [l/h] | Einwaag e [g] | Versuchsdauer [h] | Ozon (vor Filter) [mg/m³] | Ozon (nach Filter) [mg/m³] |
| 110 | 1,0 | 2 | 0,66 | 0,00 |

### Beispiel 3

- Filtermaterial:: Polymerbasis Polyacrylester
(Amberlite XAD 7) Spez. Oberfläche: 450 m²/mg
Korngröße: 0,3 bis 1,2 mm

| Gaszusammensetzung: Luft, Ozon, 50 % rel. Luftfeuchte | | | | |
|---|---|---|---|---|
| Vol-Strom [l/h] | Einwaag e [g] | Versuchsdauer [h] | Ozon (vor Filter) [mg/m³] | Ozon (nach Filter) [mg/m³] |
| 220 | 6,2 | 2 | 0,7 | 0,000 |
| 220 | 6,2 | 6 | 60 | 0,005 |

### Beispiel 4

- Filtermaterial:: Polymerbasis substituiertes Polystyrol/Divinylbenzol
(Mitsubishi Kasei Corporation (Japan))
Spez. Oberfläche: 800 m²/mg
Korngröße: 0,3 bis 1,2 mm

| Gaszusammensetzung: Luft, Ozon, 50 % rel. Luftfeuchte | | | | |
|---|---|---|---|---|
| Vol-Strom [l/h] | Einwaag e [g] | Versuchsdauer [h] | Ozon (vor Filter) [mg/m³] | Ozon (nach Filter) [mg/m³] |
| 110 | 1,1 | 5 | 0,66 | 0,00 |

In allen Beispielen ließ sich hinter dem Filter entweder kein Ozon mehr nachweisen oder die Ozon-Konzentration lag bei sehr niedrigen Werten (< 0,1 mg/m³).

## Patentansprüche

1. Filtermaterial zur Entfernung von Ozon aus Gasen und Flüssigkeiten, dadurch gekennzeichnet, daß das Filtermaterial mindestens ein vernetztes Copolymer und/oder Polystyrol enthält.

2. Filtermaterial nach Anspruch 1, dadurch gekennzeichnet, daß das Filtermaterial ein makroporöses vernetztes Copolymer mit wiederkehrenden Struktureinheiten der Formel III 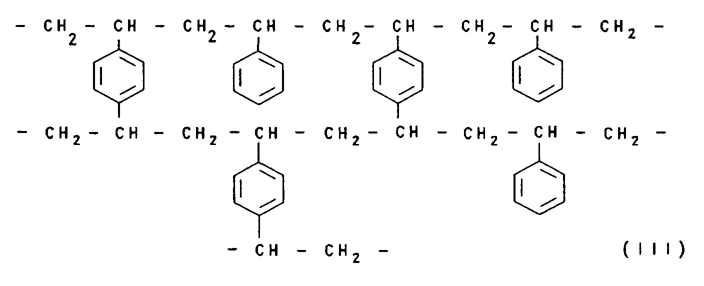 enthält.

3. Filtermaterial nach Anspruch 1, dadurch gekennzeichnet, daß das Filtermaterial ein makroporöses vernetztes Copolymer mit wiederkehrenden Struktureinheiten der Formel IV 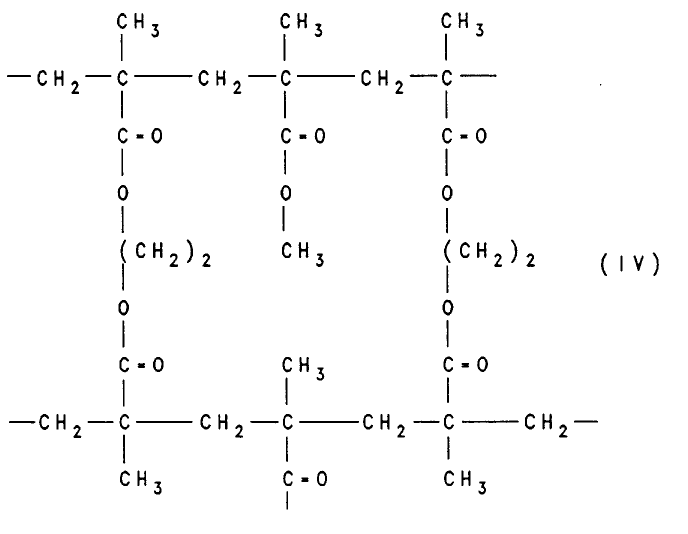 enthält.

4. Verfahren zur Entfernung von Ozon aus Gasen oder Flüssigkeiten, bei welchem ein Filtermaterial eingesetzt wird, das mindestens ein vernetztes Copolymer und/oder Polystyrol enthält, eingesetzt wird, wobei das Gas oder die Flüssigkeit mit der Oberfläche des Filtermaterials in Kontakt gebracht wird.

5. Verfahren nach Anspruch 4, dadurch gekennzeichnet, daß die Kontakttemperatur im Bereich von mindestens -10 bis + 80°C liegt.

6. Verfahren nach Anspruch 4 oder 5, dadurch gekennzeichnet, daß die Kontaktzeit im Bereich von 0,1 Sekunden bis 10 Minuten liegt.

7. Verwendung des Filtermaterials nach Anspruch 1, 2 oder 3 zur Herstellung eines ozonentfernenden Filters für Gase und Flüssigkeiten.

8. Verwendung des Filtermaterials nach Anspruch 1, 2 oder 3 in Form von Pulvern, Fasern, Folien oder Formkörpern.
